# FASCICULE DE BREVET EUROPEEN

(11) **EP 1 247 279 B1**
(45) Date de publication et mention de la délivrance du brevet: **19.07.2006**
(21) Numéro de dépôt: 01903899.1
(22) Date de dépôt: 09.01.2001
(51) Int. Cl.: G21C 3/33, G21C 5/06

(54) **RESSORT DE MAINTIEN D'UN ASSEMBLAGE DE COMBUSTIBLE D'UN REACTEUR NUCLEAIRE ET PROCEDE DE DETERMINATION OPTIMISEE DU PROFIL DE LA LAME SUPERIEURE DU RESSORT**
NIEDERHALTEFEDER ALS TEIL EINES KERNREAKTORBRENNSTABBÜNDELS UND VERFAHREN ZUR BESTIMMUNG DES OPTIMAL GESTALTETEN PROFILS DES OBEREN FEDERBLATTS
MAINTAINING SPRING FOR A FUEL ASSEMBLY IN A NUCLEAR REACTOR AND METHOD FOR OPTIMIZED DETERMINATION OF THE PROFILE OF THE UPPER BLADE OF SAID SPRING

(30) Priorité: 10.01.2000 FR 0000240
(43) Date de publication de la demande: 09.10.2002
(73) Titulaire: Framatome ANP, 92080 Paris La Defense (FR)
(72) Inventeur: D'USTON DE VILLEREGLAN, Bérenger, F-38200 Vienne (FR)
(74) Mandataire: Bouget, Lucien
(86) Numéro de dépôt international: PCT/FR2001/000058
(87) Numéro de publication internationale: WO 2001/052268

(56) Documents cités:
- US-A- 3 705 718
- US-A- 5 271 053
- PATENT ABSTRACTS OF JAPAN vol. 1998, no. 14, 31 décembre 1998 (1998-12-31) & JP 10 239475 A (MITSUBISHI HEAVY IND LTD), 11 septembre 1998 (1998-09-11)
- PATENT ABSTRACTS OF JAPAN vol. 1998, no. 12, 31 octobre 1998 (1998-10-31) & JP 10 197675 A (NUCLEAR FUEL IND LTD), 31 juillet 1998 (1998-07-31)
- PATENT ABSTRACTS OF JAPAN vol. 018, no. 638 (P-1837), 5 décembre 1994 (1994-12-05) & JP 06 249986 A (NUCLEAR FUEL IND LTD), 9 septembre 1994 (1994-09-09)

## Description

L'invention concerne un ressort de maintien d'un assemblage de combustible d'un réacteur nucléaire refroidi par de l'eau légère et en particulier d'un réacteur nucléaire refroidi par de l'eau sous pression.

Les réacteurs nucléaires tels que les réacteurs nucléaires refroidis par de l'eau sous pression comportent un coeur constitué par des assemblages de combustible, généralement de forme prismatique droite, juxtaposés, dans des dispositions verticales.

Les assemblages de combustible sont constitués chacun par un faisceau de crayons de combustible nucléaire de forme cylindrique allongée dans lequel les crayons de combustible sont parallèles entre eux. Les crayons de combustible constituant le faisceau de l'assemblage sont maintenus par une ossature qui comporte en particulier, à ses extrémités longitudinales, deux embouts dont l'un constitue l'embout inférieur de l'assemblage de combustible destiné à venir reposer sur une plaque inférieure de coeur et l'autre, l'embout supérieur de l'assemblage de combustible disposé en-dessous d'une plaque supérieure du coeur assurant le maintien des assemblages de combustible à l'intérieur du coeur, contre des forces d'entraînement axiales produites en particulier par la circulation du fluide de refroidissement du réacteur nucléaire.

L'embout supérieur des assemblages de combustible comporte une surface supérieure d'appui qui présente généralement la forme d'un cadre à section carrée.

Suivant chacun des côtés du cadre à section carrée est fixé un ressort à lame de maintien de l'assemblage de combustible sous la plaque supérieure de coeur.

Chacun des ressorts à lame fixés sur un côté du cadre de l'embout est constitué par un empilement de lames de ressort qui sont fixées chacune par une première d'extrémité, ou talon de fixation, sur l'embout supérieur de l'assemblage de combustible, par l'intermédiaire d'une ou de plusieurs vis de fixation. Chacune des lames de ressort de l'empilement comporte, dans le prolongement du talon de fixation, une branche flexible qui est inclinée par rapport au talon de fixation et par rapport à la surface d'appui de l'embout supérieur de l'assemblage de combustible. Les lames de ressort, qui sont généralement réalisées en un alliage de nickel, sont obtenues par cintrage d'une lame plate, pour obtenir l'angle d'inclinaison de la branche flexible de la lame de ressort.

Chacun des ressorts à lame fixés sur l'embout supérieur de l'assemblage de combustible comporte, à la partie supérieure de l'empilement, une lame de ressort supérieure qui comporte, à l'opposé de sa partie de fixation, une partie d'appui sur la plaque supérieure de coeur et un ensemble de lames inférieures, ou contre-lames (en général deux ou trois lames), empilées l'une sur l'autre en-dessous de la lame supérieure.

La partie d'appui de la lame supérieure est constituée par une zone cintrée de la lame séparant la branche flexible de la lame de ressort supérieure d'une partie terminale de cette lame de ressort repliée en sens inverse du talon de fixation de la lame.

La partie d'extrémité terminale de la lame de ressort supérieure assure en particulier la retenue et l'imperdabilité des lames du ressort par le fait qu'elle est introduite dans des ouvertures traversantes alignées des lames de ressort inférieures et dans une ouverture de l'embout et qu'elle constitue une clé arrêtée par un ergot à l'intérieur de l'ouverture de l'embout.

Après avoir réalisé le chargement du coeur en plaçant les assemblages de combustible dans des dispositions juxtaposées sur la plaque inférieure de coeur, on vient faire reposer sur les embouts supérieurs des assemblages de combustible, par l'intermédiaire de leurs ressorts de maintien, la plaque supérieure de coeur qui constitue la partie inférieure d'un ensemble de grandes dimensions, appelé équipements internes supérieurs du réacteur nucléaire, placé dans la cuve du réacteur au-dessus du coeur.

Pendant le fonctionnement du réacteur nucléaire, les assemblages de combustible qui sont parcourus dans la direction verticale et de bas en haut par l'eau de refroidissement sous pression du réacteur nucléaire sont maintenus par la plaque supérieure de coeur en appui sur leurs embouts par l'intermédiaire des ressorts. La flexibilité des ressorts permet de compenser les dilatations différentielles entre les assemblages de combustible et les structures de la cuve du réacteur nucléaire, à la température de fonctionnement du réacteur nucléaire.

L'inclinaison des lames des ressorts de maintien des assemblages de combustible a pour but de procurer aux ressorts une plage de fonctionnement compatible avec les variations de hauteur relative des assemblages et des cavités du coeur dans lesquelles sont disposées les assemblages, tout au long de la vie des assemblages de combustible. Cette inclinaison est obtenue par pliage des lames dans une zone cintrée située entre le talon de fixation et la branche flexible déformable de la lame.

La compatibilité géométrique des différentes lames d'un ressort entre elles impose des rayons de pliage de plus en plus faibles en remontant de la lame inférieure du ressort jusqu'à la lame supérieure. De plus, la présence de la partie d'appui constituant une zone de contact cylindrique à l'extrémité de la lame supérieure impose une plus forte inclinaison de la branche flexible déformable de la lame supérieure par rapport à son talon de fixation.

De ce fait, la lame supérieure des ressorts à lame de maintien des assemblages de combustible est toujours plus sollicitée que les autre lames, inférieures, appelées contre-lames, lors des déformations par compression du ressort de maintien en fonctionnement.

Les lames de ressort des ressorts de maintien des assemblages de combustible comportent généralement une branche flexible déformable dont l'épaisseur est variable entre la zone de pliage du talon de fixation et la partie d'extrémité opposée de la lame.

L'utilisation d'une lame ayant une épaisseur variable permet de faire travailler en flexion la plus grande longueur utile possible de la branche flexible et de retarder l'apparition d'interférences entre les différentes lames constituant le ressort de maintien.

Dans chacune des lames du ressort de maintien, le moment de flexion de la lame varie de manière linéaire suivant la direction longitudinale de la branche flexible de la lame. Dans une configuration idéale de la lame de ressort, l'inertie de flexion de la branche flexible doit être proportionnelle au moment de flexion en tout point de la branche flexible déformable.

La solution consistant à usiner un plan incliné sur l'une des faces de la lame pour réduire progressivement son épaisseur depuis le talon de fixation jusqu'à l'extrémité opposée de la lame ne peut permettre de satisfaire cette condition. En effet, l'inertie de flexion de la lame varie comme le cube de l'épaisseur de la lame. Il en résulte une concentration de contraintes et de déformations plastiques dans la zone cintrée séparant le talon de fixation de la branche flexible, ce qui se traduit par l'apparition de conditions favorables au développement de la corrosion sous contrainte dans cette zone pliée de la lame.

Bien entendu, l'obtention d'une loi de variation idéale du moment d'inertie des lames de ressort est particulièrement importante dans le cas de la lame de ressort supérieure qui subit les plus fortes contraintes. Généralement, l'optimisation de la forme des lames de ressort se limite à la lame de ressort supérieure.

On a proposé différentes solutions voir, par exemple, le document US-A-5 271 053 pour optimiser la répartition des contraintes et déformations dans les ressorts de maintien des assemblages de combustible et par exemple de remplacer les lames de ressort rectilignes disposées suivant chacun des côtés du cadre de l'embout par des ensembles de maintien comportant chacun deux branches profilées sensiblement perpendiculaires entre elles. Un tel dispositif de maintien nécessite une modification importante de la technologie des ressorts, si bien que l'analyse du comportement de longue durée des ressorts accumulée jusqu'ici dans l'utilisation des assemblages de combustible des réacteurs nucléaires n'est plus utilisable.

Le but de l'invention est donc de proposer un ressort de maintien d'un assemblage de combustible d'un réacteur nucléaire constitué d'un faisceau de crayons de combustible parallèles entre eux et d'une ossature dans laquelle les crayons de combustible sont maintenus et comportant un embout supérieur à l'une des extrémités de l'ossature sur lequel sont fixés des ressorts à lame destinés à venir en appui contre une plaque supérieure du coeur du réacteur nucléaire, le coeur du réacteur nucléaire étant constitué par des assemblages de combustible juxtaposés et placés de manière que les embouts supérieurs de leurs ossatures se trouvent à la partie supérieure du coeur en-dessous de la plaque supérieure de coeur, chacun des ressorts de chacun des embouts étant constitué par un empilement de lames de ressort fixées par un talon de fixation sur une surface d'appui de l'embout et comportant chacune une branche flexible rectiligne pliée et séparée du talon de fixation par une zone cintrée inclinée par rapport à la surface d'appui de l'embout, l'appui du ressort sur la plaque supérieure du coeur étant assuré par une partie d'appui située à l'opposé du talon de fixation d'une lame de ressort supérieure de l'empilement, ce ressort de maintien présentant des caractéristiques de résistance en service et en particulier de tenue à la corrosion sous tension améliorée par rapport aux ressorts de la technique antérieure.

Dans ce but, la branche flexible inclinée de la lame de ressort supérieure présente une largeur variable suivant sa longueur entre son talon de fixation sur l'embout supérieur de la partie d'appui sur la plaque supérieure du coeur et une partie au moins de la branche flexible inclinée située vers le talon de fixation de la lame flexible est délimitée latéralement par des côtés rectilignes inclinés angulairement et dans une disposition symétrique, par rapport à l'axe longitudinal de la lame, de manière à présenter une largeur décroissante dans la direction longitudinale à partir du talon de fixation.

Afin de bien faire comprendre l'invention, on va décrire à titre d'exemple, en se référant aux figures jointes en annexe, un mode de réalisation d'un ressort suivant l'invention, et un procédé d'optimisation du profil de la lame supérieure du ressort suivant l'invention.
La figure 1 est une vue en coupe par un plan vertical de la partie supérieure d'un assemblage de combustible suivant l'art antérieur.
La figure 2A est une vue en élévation latérale des lames d'un ressort de maintien de l'embout supérieur de l'assemblage représenté sur la figure 1.
La figure 2B est une vue de dessus du ressort à lames représenté sur la figure 2A.
La figure 3 est une vue de dessus de la branche flexible déformable de la lame supérieure d'un ressort à lames suivant l'invention.
La figure 4 est un diagramme donnant la déformation plastique des lames d'un ressort, suivant leur direction longitudinale, dans le cas d'un ressort suivant l'invention.
La figure 5 est un diagramme donnant la déformation plastique des lames d'un ressort, suivant leur direction longitudinale, dans le cas d'un ressort suivant l'art antérieur.
La figure 6 est un diagramme montrant les variations de la flèche d'un ressort à lames suivant l'invention et, de manière comparative, d'un ressort à lames suivant l'art antérieur, en fonction de la force appliquée au ressort.

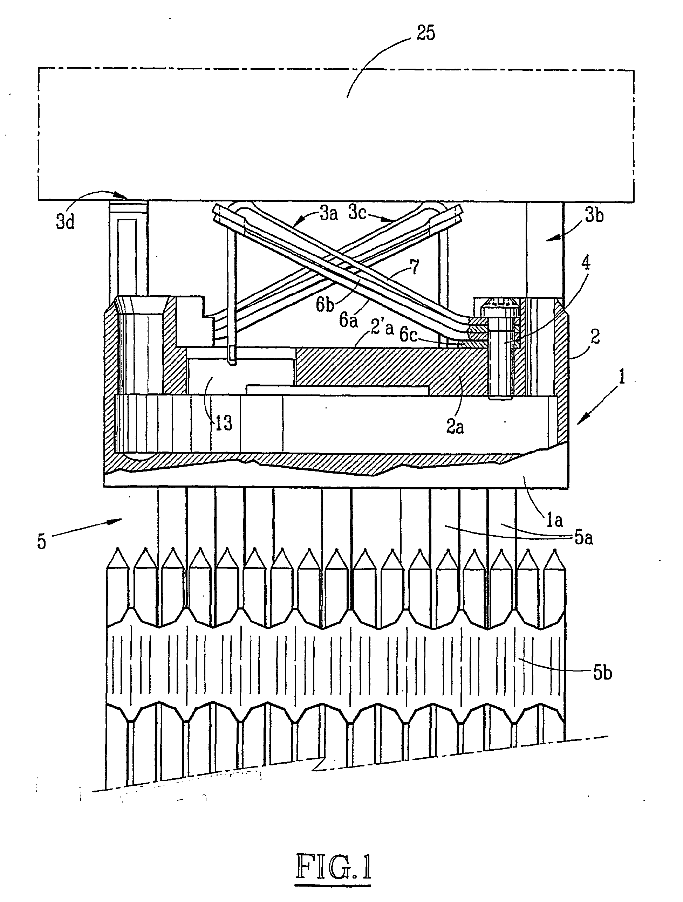

Sur la figure 1, on voit la partie supérieure de l'ossature 5 d'un assemblage de combustible d'un réacteur nucléaire refroidi par de l'eau sous pression dans laquelle les crayons de combustible sont maintenus sous forme d'un faisceau. L'ossature 5 comporte des tubes-guides 5a et des grilles-entretoises telles que 5b ainsi que des embouts d'extrémité dont un embout supérieur désigné de manière générale par le repère 1.

L'embout supérieur 1 comporte une plaque adaptatrice 1a de forme sensiblement carrée et un cadre 2 de forme carrée solidaire de la plaque adaptatrice et disposé suivant les quatre côtés de la section carrée de l'embout supérieur 1.

Chacun des côtés du cadre de l'embout tel que le côté 2a représenté en coupe sur la figure 1 comporte une surface supérieure d'appui telle que 2'a au-dessus de laquelle est placé un ressort de maintien de l'assemblage de combustible en position de service sous la plaque supérieure 25 du coeur d'un réacteur nucléaire.

L'embout supérieur 1 comporte quatre ressorts 3a, 3b, 3c et 3d disposés chacun au-dessus de la surface d'appui d'un côté du cadre, tel que le ressort 3a disposé au-dessus de la surface d'appui 2'a du côté 2a.

Les ressorts 3a et 3b, qui sont disposés au-dessus de deux côtés adjacents du cadre perpendiculaires entre eux, sont fixés par des vis telles que 4 dans une première partie d'angle du cadre, les deux autres ressorts 3c et 3d de l'embout supérieur 1 étant fixés par une partie d'extrémité dans une seconde partie d'angle du cadre située sur une même diagonale que la partie d'angle sur laquelle sont fixés les ressorts de maintien 3a et 3b.

Chacun des ressorts de maintien est constitué de trois lames de ressort superposées et fixées par une même vis 4 dans un angle du cadre 2 de l'assemblage de combustible.

Les ressorts de maintien de l'embout supérieur d'un assemblage de combustible peuvent comporter un nombre de lames de ressort différent de trois, par exemple quatre lames de ressort.

Les ressorts 3a, 3b, 3c et 3d de l'embout supérieur de l'assemblage de combustible sont tous réalisés de la même manière, de sorte qu'on ne décrira que l'un des ressorts, par exemple le ressort 3a disposé suivant le côté 2a du cadre de l'embout.

Le ressort 3a comporte une lame de ressort supérieure 7 et deux contre-lames 6b et 6a superposées dans cet ordre, de haut en bas, au-dessus de la surface d'appui 2'a du côté 2a du cadre.

Chacune des lames de ressort comporte un talon d'appui traversé par une ouverture de passage de la vis de fixation 4, les talons d'appui de la lame 7 et des contre-lames 6b et 6a étant superposés dans la partie d'angle du cadre, de manière que les ouvertures traversantes des talons d'appui permettent le passage de la vis 4 de fixation qui est vissée dans une ouverture taraudée prévue dans la partie d'angle du cadre.

On peut placer en-dessous du talon d'appui de la contre-lame inférieure 6a, une cale 6c en appui sur la surface 2'a du côté 2a du cadre pour régler la position en hauteur des lames du ressort de maintien. La cale 6c joue un rôle analogue à un talon d'appui d'une lame de ressort inférieure du ressort de maintien.

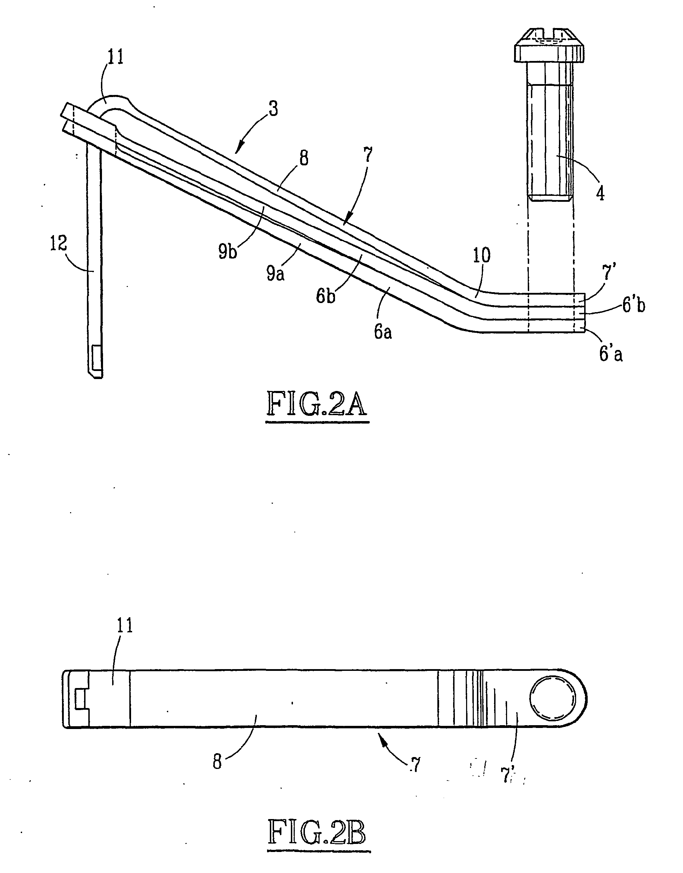

On va maintenant se reporter aux figures 2A et 2B pour décrire plus en détail un ressort 3 qui peut être placé suivant l'un des côtés du cadre de l'embout pour constituer un ressort tel que 3a, 3b, 3c ou 3d.

Le ressort 3 comporte une lame de ressort supérieure 7 et deux contre-lames 6a et 6b empilées l'une sur l'autre, de manière que la contre-lame 6a constitue la lame de ressort inférieure du ressort de maintien, la lame du ressort 7, la lame supérieure, et la contre-lame 6b, une lame de ressort intermédiaire.

Chacune des lames 7, 6a et 6b comporte un talon de fixation, respectivement 7', 6'a et 6'b, traversé par une ouverture de passage d'une vis de fixation 4 du ressort.

Les lames de ressort comportent de plus, dans le prolongement du talon de fixation, suivant la direction longitudinale de la lame de ressort, une branche flexible constituant la partie de la lame de ressort déformable en flexion.

Les branches flexibles respectives 8, 9a et 9b des lames de ressort 7, 6a et 6b sont pliées vers le haut et inclinées par rapport aux talons de fixation correspondant 7', 6'b et 6'a, chacune des lames de ressort comportant une partie cintrée 10 entre le talon de fixation et la branche flexible déformable en flexion.

De cette manière, comme il est visible sur la figure 1, les branches des ressorts fixées sur les côtés du cadre sont inclinées par rapport aux surfaces d'appui du cadre, entre leur talon de fixation qui est serré contre le côté du cadre et leur partie d'extrémité opposée qui est à une certaine hauteur au-dessus du côté du cadre pour permettre un débattement du ressort dans la direction verticale.

Comme il est visible en particulier sur la figure 2A, le rayon de cintrage de la lame supérieure 8 est sensiblement plus faible que le rayon de cintrage des contre-lames 6a et 6b, de sorte que la lame de ressort supérieure 7 subit, dans sa zone cintrée 10, des contraintes supérieures aux contraintes dans les parties correspondantes des contre-lames 6a et 6b.

La lame supérieure de ressort 7 comporte de plus, à l'extrémité de la lame flexible 8, opposée à la zone cintrée 10 de liaison avec le talon 7', une partie cylindrique 11 résultant du pliage d'une partie terminale 12 de la lame de ressort 7 pour obtenir une clé de guidage et de fixation imperdable des lames de ressort. La partie terminale 12 de la lame de ressort supérieure 7 est pliée dans le sens inverse du talon de fixation 7' par rapport à la branche flexible 8, de manière qu'elle se trouve dans une direction sensiblement perpendiculaire aux talons de fixation 7', 6'a et 6'b. La clé de guidage et de fixation du ressort constituée par la partie terminale 12 de la lame supérieure 7 qui est perpendiculaire au côté du cadre de l'embout est introduite dans des ouvertures traversant les parties terminales des contre-lames de ressort 9a et 9b, à l'opposé des talons de fixation 6'a et 6'b, pour assurer le guidage et le maintien des contre-lames et dans une ouverture 13 du cadre de l'embout (visible sur la figure 1) dans laquelle la partie terminale 12 constituant une clé de fixation imperdable des lames de ressort vient s'accrocher sur un ergot.

La partie d'extrémité 11 de la branche flexible 8 de la lame de ressort supérieure 7 opposée au talon de fixation 7' est réalisée de manière à présenter une surface extérieure d'appui de forme cylindrique par l'intermédiaire de laquelle on assure le contact entre la plaque supérieure de coeur 25 et le ressort de maintien. La présence de cette zone de contact cylindrique sur la partie d'extrémité 11 de la branche flexible 8 de la lame de ressort supérieure 7 nécessite une plus forte inclinaison de la branche flexible 8 de la lame supérieure 7, par rapport à l'inclinaison correspondante des branches flexibles 9a et 9b des contre-lames 6a et 6b.

De manière à limiter le plus possible la détérioration des lames des ressorts de maintien d'assemblages de combustible en service, par corrosion sous tension dans le fluide de refroidissement du réacteur nucléaire, on a cherché à rendre la plus homogène possible la déformation et la répartition des contraintes suivant la longueur des lames de ressort.

En particulier, il est nécessaire de limiter le plus possible la concentration de contraintes dans les zones les plus chargées de la lame de ressort supérieure des ressorts de maintien. La partie de la lame de ressort supérieure subissant les plus fortes contraintes est constituée par la partie cintrée 10 entre le talon de fixation 7' et la branche flexible rectiligne 8.

Dans le cas de ressorts de maintien suivant l'art antérieur, comme représenté sur les figures 2A et 2B, on a réalisé la branche flexible rectiligne de la lame de ressort sous une forme effilée, l'épaisseur de la lame de ressort diminuant de manière continue entre la zone cintrée 10 et la partie d'extrémité opposée de la branche flexible 8 reliée à la partie d'appui 11 de la lame de ressort.

Comme il est visible sur la figure 2B, la largeur de la branche flexible 8 de la lame de ressort 7 est constante suivant toute la longueur de la lame de ressort.

L'utilisation d'une lame effilée dont l'épaisseur décroît de manière continue et régulière suivant la direction longitudinale de la lame, la largeur de la lame étant d'autre part constante ne permet pas, comme il a été expliqué plus haut, de faire varier l'inertie de la lame de la même manière que le moment de flexion subi par la lame de ressort en service, c'est-à-dire de manière linéaire suivant la longueur de la branche flexible de la lame de ressort.

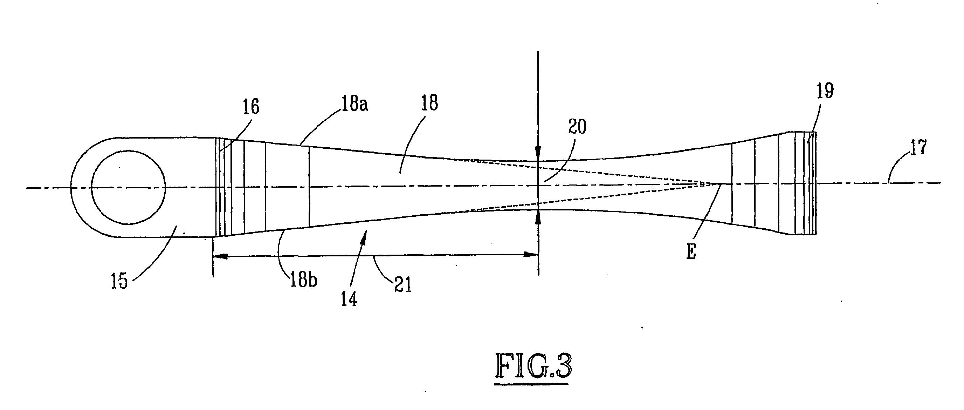

Sur la figure 3, on a représenté la branche flexible, c'est-à-dire la partie déformable en flexion d'une lame supérieure d'un ressort de maintien d'assemblage de combustible suivant l'invention.

Le ressort de maintien selon l'invention est réalisé de manière analogue à un ressort suivant l'art antérieur, seule la lame de ressort supérieure du ressort suivant l'invention ayant été modifiée dans sa forme et plus précisément dans la forme de sa branche flexible représentée sur la figure 3.

La lame de ressort supérieure suivant l'invention, désignée de manière générale par le repère 14, comporte, successivement dans la direction longitudinale 17 de la lame, un talon de fixation 15, une zone cintrée 16, la branche flexible 18 et une zone d'appui 19 du ressort à l'extrémité de la branche flexible 18 opposée à la zone cintrée 16. A la suite de la zone d'appui 19, la lame de ressort 14 comporte une partie terminale constituant une clé de guidage et de fixation des lames du ressort, cette partie terminale se trouvant dans un plan perpendiculaire au plan de la figure 3 qui représente une vue de dessus de la lame de ressort.

Suivant l'invention, la branche flexible 18 de la lame de ressort 14 du ressort de maintien suivant l'invention présente une largeur variable suivant la direction de son axe longitudinal 17 et, dans une première partie de la branche flexible s'étendant dans la direction longitudinale à partir de la fin de la zone cintrée 16, une partie de largeur décroissante délimitée par deux bords latéraux rectilignes 18a et 18b symétriques par rapport à l'axe longitudinal 17 de la branche flexible 18 de la lame de ressort.

A la suite de sa première partie délimitée entre deux bords rectilignes dont la largeur est décroissante de manière continue, la branche flexible 18 de la lame comporte une seconde partie dans laquelle la largeur de la lame augmente depuis une valeur minimale, dans une section transversale 20, jusqu'à une valeur maximale atteinte dans la zone d'appui 19, cette valeur maximale étant sensiblement égale à la largeur de la lame dans la zone du talon de fixation 15.

Dans cette seconde zone de la branche flexible à largeur croissante, les bords latéraux de la lame sont constitués par des portions de cercle ayant un rayon d'une longueur sensiblement égale ou légèrement supérieure au côté du cadre de l'embout.

De manière à obtenir une inertie en flexion de la branche flexible 18 de la lame de ressort qui varie selon une relation linéaire analogue à la relation de variation du moment de flexion de la lame, on détermine la position du point E situé à l'intersection de l'axe longitudinal 17 de la branche flexible 18 et de la trace d'une section transversale de la branche flexible 18 dans laquelle le moment de flexion s'annule. Cette recherche du point E, appelé point d'épure, peut être réalisée en utilisant un logiciel de calcul permettant de déterminer la variation du moment de flexion suivant la direction longitudinale de la branche flexible de la lame.

On décrira plus loin le principe général de conception du logiciel de calcul utilisé, ses principales fonctions et son mode d'utilisation pour définir le tracé de la branche flexible de la lame supérieure d'un ressort de maintien suivant l'invention.

La seconde partie de la branche flexible 18 dont la largeur est croissante suivant la direction longitudinale de la branche flexible peut être définie par un tracé permettant un raccordement entre les côtés rectilignes de la première partie de la branche flexible et l'extrémité d'appui 19, par des portions de cercle tangentes aux côtés rectilignes de la première partie de la lame flexible dont le rayon R est choisi à une valeur proche de la longueur du côté du cadre de l'embout de l'assemblage de combustible, par exemple à une valeur de 208 mm.

Les caractéristiques géométriques dé la branche flexible de la lame sont déterminées principalement par la distance entre l'extrémité de la zone cintrée 16 où commence la première partie de la branche flexible 18 et la section 20 de la lame flexible ayant la plus faible largeur ainsi que la largeur minimale de la branche flexible de la lame dans la section 20.

Par exemple, dans le cas d'un assemblage de combustible pour un réacteur nucléaire refroidi par de l'eau sous pression, on a déterminé la forme d'une branche flexible 18 d'une lame de ressort supérieure pour laquelle la distance entre l'extrémité de la zone cintrée et la zone de largeur minimale de la branche flexible est de l'ordre de 55 mm, la largeur minimale de la branche flexible étant de l'ordre de 9 mm.

La pente des côtés rectilignes 18a et 18b de la première partie de la branche flexible 18 par rapport à la direction longitudinale de la lame flexible est de l'ordre de 10 %.

On a gardé comme largeur maximale de la lame, par exemple dans la partie cintrée 16 et dans la partie d'appui 19, une largeur de 18,2 mm qui est la largeur habituelle d'une lame selon l'art antérieur de forme effilée.

Contrairement à une lame de ressort suivant l'art antérieur, la lame de ressort supérieure du ressort de maintien suivant l'invention présente une épaisseur constante suivant toute sa longueur.

Une étape essentielle pour la détermination de la forme de la branche flexible de la lame supérieure d'un ressort de maintien suivant l'invention est la détermination du point d'épure E, à partir des variations du moment de flexion suivant la direction longitudinale 17 de la lame flexible. Cette détermination est effectuée, de manière avantageuse, en utilisant un logiciel tel que le logiciel RIGIDE conçu et utilisé par la société déposante.

Le logiciel RIGIDE est utilisé en particulier pour déterminer la variation du moment de flexion suivant la longueur d'une lame de ressort d'épaisseur constante qui est fixée par un talon de fixation à l'une de ses extrémités et sur laquelle on exerce une force de compression sur une partie d'appui à sa seconde extrémité.

Le logiciel utilisé permet principalement de calculer la caractéristique force/flèche des ressorts de maintien à lames à partir de blocs de données identifiés par des mots clés.

A partir de ces données, le logiciel permet de déterminer par un calcul aux éléments finis, les caractéristiques des ressorts telles que les caractéristiques de déformation des ressorts sous l'effet de forces de compression, la variation de la déformation plastique des ressorts suivant leur direction longitudinale, la variation du moment de flexion suivant la direction longitudinale de la lame de ressort supérieure et toute autre caractéristique utile pour connaître le comportement du ressort sous l'effet de forces de compression.

En outre, la connaissance de la variation du moment de flexion suivant la direction longitudinale de la lame de ressort supérieure permet de déterminer la section et le point de l'axe longitudinal de la lame de ressort suivant lesquels le moment de flexion s'annule, ce qui permet de déterminer une forme optimisée d'un ressort suivant l'invention.

Le logiciel utilise un modèle de calcul et un fichier contenant un ensemble de blocs de données qui sont identifiés par des mots clés.

Un premier bloc de données indispensables contient la loi contrainte/déformation du matériau constituant les lames de ressort, sous la forme de paires de valeurs donnant la contrainte de traction puis la déformation en traction correspondante d'un élément constitué du matériau des lames de ressorts. Le nombre de paires de valeurs est généralement limité à vingt et les déformations sont données par ordre de valeurs croissantes.

La, loi contrainte/déformation décrite dans ce bloc de données est la courbe de traction conventionnelle du matériau des lames de ressort.

Une seconde donnée indispensable est constituée par le coefficient de Poisson du matériau des lames de ressort. Cette donnée est constituée par une valeur numérique correspondant à la valeur du paramètre.

Un troisième bloc de données indispensables est constitué par le bloc de description géométrique des lames.

Chacune des lames de ressort est décrite à partir d'un ensemble de valeurs de différents longueurs, rayons, épaisseurs, angles et largeurs caractéristiques de la lame de ressort. En particulier, l'une des longueurs entrées dans le bloc de données correspond à la longueur de la branche flexible du ressort entre la sortie de la zone cintrée et le début de la zone d'appui cylindrique de la lame de ressort, dans le cas des lames de ressort supérieures.

Les rayons sont les rayons de courbure des zones cintrées ou pliées de la lame de ressort et les épaisseurs sont les épaisseurs de la lame de ressort dans différentes parties de la lame de ressort. L'angle caractéristique de la lame de ressort est constitué par l'angle de pliage de la branche flexible, c'est-à-dire l'angle que fait la branche flexible déformable de la lame de ressort avec le talon de fixation.

Le profil de largeur de la branche flexible d'une lame de ressort suivant l'invention telle que représentée sur la figure 3 est décrit par une première valeur, appelée cote, donnant la position, suivant la direction longitudinale de la lame de ressort, de la section de la lame présentant la plus faible largeur.

Sur la figure 3, on a indiqué cette section de largeur minimale par le repère 20 et sa position suivant la direction axiale 17 de la lame de ressort, par la longueur du segment 21 entre la zone cintrée 16 et la section 20 suivant la direction 17.

Par exemple, une lame supérieure d'un ressort suivant l'invention peut présenter une largeur dans sa section 20 de plus faible largeur de l'ordre de 9 mm et la cote de cette section 20 de plus faible largeur par rapport à la sortie de la zone cintrée peut être de l'ordre de 58 mm. Le profil de largeur de la lame de ressort supérieure selon l'invention est alors simplement défini par les valeurs 9 mm et 58 mm.

Une donnée supplémentaire concernant le profil de largeur de la lame est constituée par la largeur maximale de la lame suivant la zone cintrée et suivant la zone d'appui aux extrémités de la branche flexible 18. Cette largeur est généralement de l'ordre de 18,2 mm.

Un autre paramètre entré comme donnée est constitué par la distance entre le point de contact entre la lame supérieure du ressort et la première contre-lame, dans sa partie d'extrémité opposée au talon de fixation et le plan de la peau intérieure de la lame du ressort supérieur.

D'autres données ne sont qu'optionnelles et peuvent être constituées par l'écrouissage maximal admissible, c'est-à-dire la déformation plastique maximale admissible en fonction des limites de qualification du logiciel, par les coefficients de frottement de la lame de ressort supérieure ou des lames de ressort entre elles ou encore par la hauteur de cales, lorsque de telles cales sont utilisées en remplacement de contre-lames.

Le logiciel permet de déterminer et d'éditer, dans un fichier de résultats, la caractéristique force/flèche des lames de ressorts.

Il est également possible d'obtenir d'autres informations sur l'état du ressort sous l'effet de forces de compression.

On peut obtenir en particulier la géométrie déformée du ressort, c'est-à-dire les profils déformés de toutes les lames composant le ressort. Chaque profil est décrit par un ensemble de points de coordonnée XY situés sur la fibre neutre des lames dans leur partie déformable, c'est-à-dire suivant la branche flexible des ressorts et à la limite des parties d'extrémité des lames de ressort.

Le chargement du ressort est spécifié par l'utilisateur. Dans le cas où aucun chargement n'est spécifié, le logiciel édite automatiquement un fichier contenant la géométrie de référence du modèle de calcul.

Le logiciel permet également d'obtenir la déformation totale et la déformation plastique en peau supérieure de chacune des lames constituant le ressort.

Le fichier de résultats contient des groupes de paires de valeurs correspondant aux différentes lames du ressort, selon leur ordre de numérotation. Généralement, la lame supérieure est désignée comme lame 1 et les contre-lames successives comme lames 2, 3, 4, ... . La première valeur de chaque paire de valeurs donne la position du point considéré sur la peau supérieure, la deuxième valeur, la déformation plastique localisée en ce point. La position de chaque point est le cumul de longueurs développées en peau supérieure, depuis l'axe de la vis de fixation du ressort jusqu'au point considéré.

Le logiciel permet d'obtenir également la contrainte en peau supérieure des lames de ressorts sous la forme de paires de valeurs, la première valeur de chaque paire donnant la position du point considéré sur la peau supérieure de la lame de ressort et la deuxième valeur la contrainte localisée en ce point.

Enfin, le logiciel permet d'obtenir, comme indiqué plus haut, le moment de flexion dans les lames, sous la forme des valeurs des moments de flexion localisés dans les sections successives des parties déformables des différentes lames. Le fichier de résultats contient des groupes de paires de valeurs correspondant aux différentes lames selon leur ordre de numérotation. La première valeur de chaque paire donne la position de la section considérée le long de la lame ; la deuxième valeur est le moment de flexion dans cette section. La position de chaque section correspond au cumul de longueurs développées sur la fibre neutre depuis l'axe de la vis jusqu'à la section considérée.

Comme indiqué plus haut, la variation du moment de flexion suivant la direction longitudinale de la partie déformable des lames permet de déterminer le point à déformation nulle constituant le point d'épure E permettant de tracer les côtés rectilignes de la branche flexible de la lame de ressort supérieure d'un ressort optimisé suivant l'invention.

Pour tracer le profil de largeur de la lame supérieure d'un ressort suivant l'invention, on choisit des paramètres géométriques et en particulier la position axiale de la section de plus faible largeur de la lame et la largeur minimale, ainsi que la largeur maximale aux extrémités de la lame et la longueur de la branche flexible. On détermine par le calcul à l'aide du logiciel, la répartition des moments de flexion suivant l'axe longitudinal de la lame et le point de l'axe où le moment de flexion s'annule. On obtient ainsi le point d'épure E. On trace les segments de droite joignant le point d'épure E et une première des sections rectilignes d'extrémité de la branche flexible de largeur maximale. On complète le tracé du profil de largeur de la lame par des lignes circulaires de jonction des segments de droite et de la seconde section rectiligne d'extrémité de la branche flexible de largeur maximale.

L'exécution du programme de calcul est déclenchée par une instruction particulière donnant les valeurs de hauteurs comprimées du ressort ou les flèches du ressort dans différents états de déformation, ce qui revient à soumettre le ressort à une série de sollicitations définies, soit par les hauteurs comprimées, soit par les flèches de déformation des ressorts.

Les résultats sont édités sous forme de tables X, Y et peuvent être tracés directement sous forme de graphes au moyen de tout traceur de courbes compatible avec le calculateur et le logiciel utilisés.

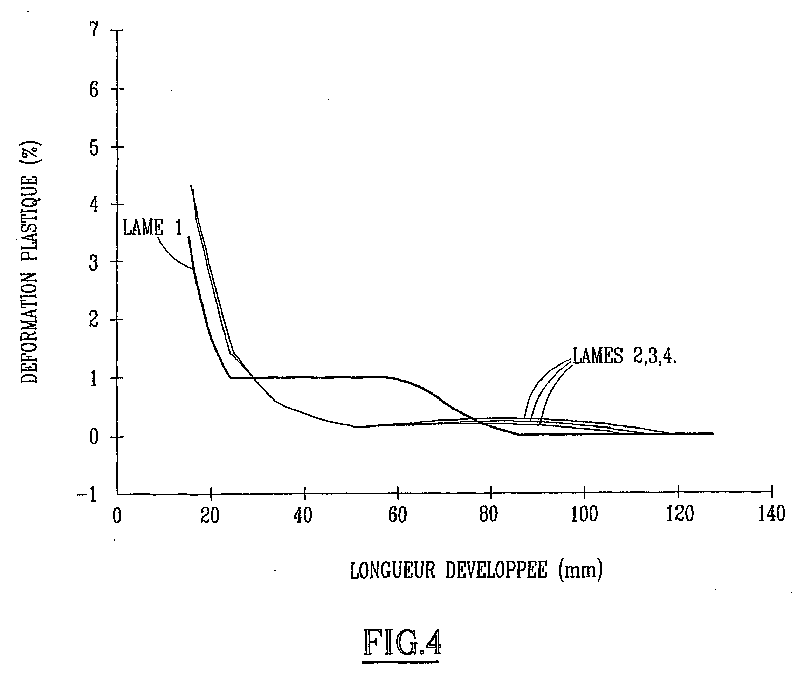

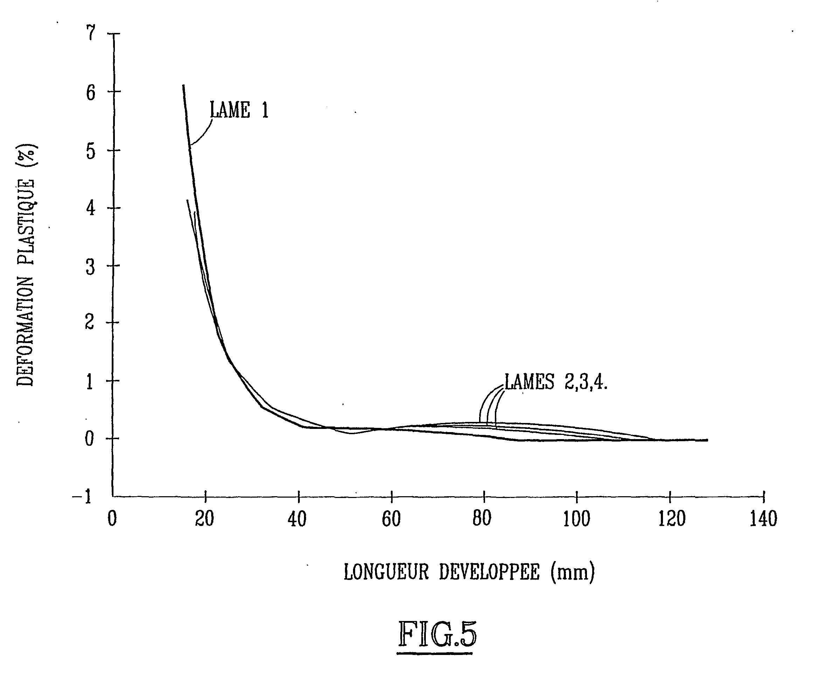

Sur les figures 4 et 5, on a représenté la variation de la déformation plastique suivant la longueur des lames d'un ressort suivant l'invention et suivant l'art antérieur, respectivement.

La longueur figurant en abscisse est la longueur développée du ressort en millimètre depuis l'axe de la vis de fixation du ressort.

Chacun des ressorts comporte quatre lames, la lame supérieure étant désignée comme lame 1.

La lame supérieure du ressort suivant l'art antérieur présente une forme effilée, c'est-à-dire une épaisseur décroissante le long de la branche flexible de la lame de ressort, entre la fin de la zone cintrée et la zone d'appui de la lame, et une largeur constante.

La lame supérieure du ressort suivant l'invention présente une épaisseur constante et une largeur variable, le profil de largeur de la lame de ressort étant représenté sur la figure 3. La forme correspondante de la branche flexible de la lame est dite forme en diabolo, du fait que la largeur diminue jusqu'à une section 20 de resserrement maximal pour croître ensuite à nouveau jusqu'à la largeur maximale de la lame de ressort.

Sur les figures 4 et 5, on a représenté la variation de la déformation plastique des lames de ressort suivant leur longueur, dans le cas d'un chargement entraînant une déformation avec une flèche maximale du ressort.

On voit sur les figures 4 et 5 que les contre-lames, désignées comme lames 2, 3 et 4, du ressort suivant l'invention et du ressort suivant l'art antérieur, ont des comportements sensiblement identiques, aussi bien l'une par rapport à l'autre que dans le cas de l'un et de l'autre ressorts.

En revanche, la lame supérieure ou lame 1 présente un comportement tout à fait différent des contre-lames, dans le cas d'un ressort suivant l'invention, comme représenté sur la figure 4.

En comparant la caractéristique de la lame 1, dans le cas du ressort suivant l'invention et dans le cas du ressort suivant l'art antérieur, on voit que la déformation maximale du ressort, qui est observée dans la partie cintrée séparant le talon de fixation de la branche flexible du ressort, est sensiblement inférieure dans le cas de la lame de ressort supérieure du ressort suivant l'invention, comme il apparaît en comparant les figures 4 et 5.

La déformation plastique maximale de la lame supérieure du ressort est à peu près deux fois plus faible dans le cas du ressort suivant l'invention.

En outre, la déformation plastique de la première partie de la branche flexible de la lame de ressort supérieure du ressort suivant l'invention, délimitée par des côtés latéraux rectilignes inclinés et symétriques, est parfaitement constante suivant toute sa longueur, la déformation plastique diminuant ensuite dans la partie délimitée par des bords courbes de la branche flexible pour atteindre une valeur nulle en un point situé approximativement à 90 mm de l'axe de la vis, suivant la longueur de la lame de ressort, ce point correspondant sensiblement au point d'inflexion E au niveau duquel le moment de flexion de la lame s'annule.

En comparant le comportement à la déformation plastique de la lame supérieure du ressort suivant l'invention telle que représentée sur la figure 4 et le comportement à la déformation plastique de la lame supérieure du ressort suivant l'art antérieur représentée sur la figure 5, on voit que la déformation est répartie de manière beaucoup plus homogène suivant la longueur de la lame, dans le cas du ressort suivant l'invention.

En particulier, la diminution de la déformation et de la contrainte dans la partie cintrée de la lame de ressort, dans le cas du ressort suivant l'invention, permet d'obtenir des conditions plus favorables en ce qui concerne la tenue à la corrosion sous tension du ressort comprimé dans le réacteur en service.

Ce comportement amélioré de la lame supérieure du ressort réalisée suivant l'invention a été prouvé par des essais de longue durée dont les résultats seront donnés plus loin.

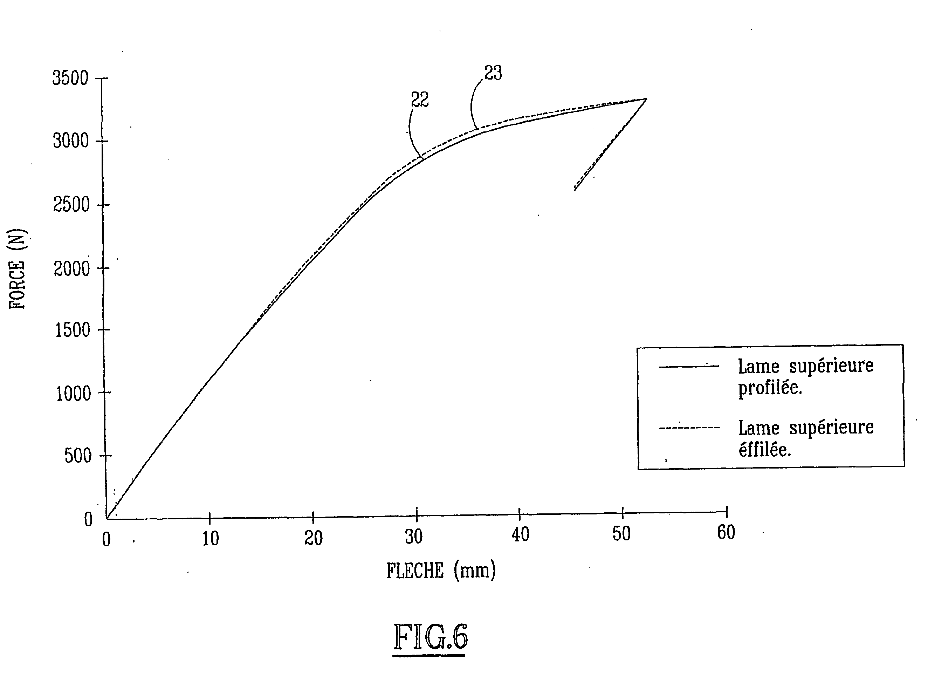

Sur la figure 6, on a représenté les caractéristiques force/flèche de la lame supérieure d'un ressort réalisé suivant l'invention (courbe 22 en traits pleins) et d'un ressort réalisé suivant l'art antérieur (courbe 23 en pointillés).

La lame supérieure du ressort suivant l'invention présente une forme profilée en diabolo telle que représentée sur la figure 3 et la lame supérieure du ressort suivant l'art antérieur, de largeur constante, présente une épaisseur décroissante suivant sa longueur, c'est à dire une forme effilée.

Comme il est visible sur la figure 6, les caractéristiques du ressort suivant l'art antérieur et du ressort suivant l'invention sont très proches l'une de l'autre, les courbes étant pratiquement confondues.

La flèche observée sur la lame de ressort supérieure du ressort suivant l'invention est légèrement plus forte que la flèche de la lame supérieure du ressort suivant l'art antérieur, lorsque la force appliquée au ressort est supérieure à 1500 N.

On a effectué sur deux ressorts réalisés suivant l'invention et sur un ressort de comparaison suivant l'art antérieur des essais de maintien de longue durée dans un milieu analogue au milieu primaire d'un réacteur nucléaire à eau sous pression, les ressorts étant soumis à une force de compression pendant toute la durée de l'essai.

Le milieu primaire dans lequel on réalise les essais est de l'eau sous pression à une température de 360°C renfermant 1200 mg/kg de bore sous forme d'acide borique et 2 mg/kg de lithium sous forme de lithine et dans un état désaéré. Le milieu primaire reconstitué présente une pression d'hydrogène p(H₂) comprise entre 0,25 et 0,40 bar.

On a effectué des essais d'une durée de 2000 heures en soumettant les ressorts à une force de compression imposant une flèche maximale pendant toute la durée de l'essai.

Les résultats des essais seront donnés dans le tableau figurant ci-dessous.

Le ressort comparatif suivant l'art antérieur est désigné par le repère R68. Ce ressort comporte quatre lames effilées en alliage de nickel réalisées par laminage.

Les ressorts R77 et R78 sont des ressorts suivant l'invention.

La lame supérieure des ressorts R77 et R78 réalisée suivant l'invention, ou lame 1, est profilée et présente une forme en diabolo. Les contre-lames du ressort ou lames 2, 3 et 4 sont des lames de largeur constante analogues aux contre-lames du ressort suivant l'art antérieur.

Les lames sont rectifiées avant pliage.

Toutes les lames de ressort sont réalisées en un alliage de nickel de type Inconel 718 renfermant en poids 50 à 55 % de nickel, 17 à 21 % de chrome, de 4,75 à 5,55 % de niobium, de 2,8 à 3,3 % de molybdène, de 0,65 à 1,15 % de titane, de 0,2 à 0,8 % d'aluminium, le solde, à l'exception d'impuretés inévitables, étant constitué par du fer.

| Références ressorts | Efforts de compression (daN) | | Etat des lames des ressorts après essai |
|---|---|---|---|
| | avant essai | en fin d'essai | |
| R68 | 639 | 346 | lame 1 fissurée dans la partie cintrée lame 2 usée dans la partie cintrée lames 3 et 4 non détériorées |
| R77 | 575 | 436 | lames non détériorées |
| R78 | 575 | 436 | lames non détériorées |

Dans la première colonne du tableau, on a indiqué les références des ressorts, dans les seconde et troisième colonnes du tableau, respectivement, les efforts de compression sur le ressort au début et à la fin de l'essai, et dans la quatrième colonne du tableau, l'état des lames des ressorts après l'essai de 2000 heures à 360°C.

L'état des lames des ressorts après essai est évalué par un examen à la loupe binoculaire à l'issue des essais.

Le chargement initial du ressort suivant l'art antérieur pour obtenir une flèche donnée du ressort est supérieur au chargement des ressorts suivant l'invention.

La relaxation du ressort mesurée par la diminution de l'effort de compression au cours de l'essai est sensiblement supérieur dans le cas du ressort suivant l'art antérieur, l'effort de compression s'établissant à un niveau supérieur à la fin de l'essai, dans le cas des ressorts suivant l'invention.

Dans le cas du ressort suivant l'art antérieur, la lame supérieure, ou lame 1, est fissurée dans sa partie cintrée à l'issue de l'essai et la lame 2 présente des traces d'usure dans sa partie cintrée.

Les lames 3 et 4 ne présentent pas de signes de détérioration.

Dans le cas des ressorts suivant l'invention, aucune des lames ne présente de signes de détérioration.

Il est à remarquer que l'essai est tout à fait révélateur du comportement des ressorts dans le milieu primaire d'un réacteur nucléaire au cours d'une très longue période de maintien, ces essais ayant été effectué à une température de 360°C sensiblement supérieure à la température du milieu primaire (315 à 320°C). De ce fait, les essais permettent de déterminer le comportement des ressorts dans un milieu primaire, pendant une durée quatre fois supérieure à la durée réelle de l'essai.

Le ressort de maintien suivant l'invention présente donc une tenue très améliorée à la corrosion sous tension par rapport aux ressorts suivant l'art antérieur.

Les caractéristiques de tenue à la corrosion de la lame supérieure du ressort et des contre-lames sont également améliorées par un usinage de rectification préalable au pliage des lames de ressort en alliage de nickel.

L'utilisation d'un logiciel de calcul permettant de déterminer les caractéristiques des ressorts de maintien et en particulier la variation du moment de flexion suivant la longueur des lames de ressort permet d'optimiser parfaitement la forme de la lame supérieure de ressort, pour obtenir une déformation plus homogène de cette lame supérieure suivant sa longueur, lorsqu'elle est soumise à une force de compression.

Le logiciel de calcul permet également de contrôler les propriétés des ressorts réalisés suivant l'invention.

L'invention ne se limite pas au mode de réalisation qui a été décrit.

C'est ainsi que la lame supérieure du ressort de maintien suivant l'invention peut présenter une forme différente de celle qui a été décrite quant à sa seconde partie de raccordement entre la première partie délimitée par des côtés rectilignes inclinés et la partie d'extrémité d'appui du ressort de largeur maximale.

De même, les caractéristiques dimensionnelles des ressorts peuvent être modifiées en fonction de la forme et de la dimension des embouts des assemblages de combustible. Des ressorts de maintien suivant l'invention peuvent être utilisées pour le maintien de tout assemblage de combustible sous la plaque supérieure du coeur d'un réacteur nucléaire, par l'intermédiaire de son embout supérieur.

## Revendications

1. Ressort de maintien d'un assemblage de combustible d'un réacteur nucléaire constitué d'un faisceau de crayons de combustible parallèles entre eux et d'une ossature (5) dans laquelle sont maintenus les crayons de combustible et comportant un embout supérieur (1) à l'une des extrémités de l'ossature (5) sur lequel sont fixés des ressorts à lames (3a, 3b, 3c, 3d) destinés à venir en appui contre une plaque supérieure du coeur (25) du réacteur nucléaire, le coeur du réacteur nucléaire étant constitué par des assemblages de combustible juxtaposés et placés de manière que les embouts supérieurs (1) de leurs ossatures se trouvent à la partie supérieure du coeur en-dessous de la plaque supérieure du coeur (25), chacun des ressorts de maintien (3a, 3b, 3c, 3d) de chacun des embouts (1) étant constitué par un empilement de lames de ressort (6a, 6b, 7) fixées par un talon de fixation sur une surface d'appui (2'a) de l'embout (1) et comportant chacune une branche flexible inclinée par rapport à la surface d'appui (2'a) de l'embout (1), l'appui du ressort (3a, 3b, 3c, 3d) sur la plaque supérieure de coeur étant assuré par une partie d'appui (19) d'une lame de ressort supérieure (14) de l'empilement située à l'opposé du talon de fixation (15) de la lame de ressort supérieure (14), **caractérisé par le fait que** la branche flexible inclinée (18) de la lame de ressort supérieure (14) présente une largeur variable suivant sa longueur entre le talon de fixation (15) sur l'embout supérieur (1) et la partie d'appui (19) sur la plaque supérieure de coeur et qu'une partie au moins de la branche flexible inclinée (18) située vers le talon de fixation (15) est délimitée latéralement par des côtés rectilignes (18a, 18b) inclinés angulairement par rapport à un axe longitudinal (17) de la lame de ressort supérieure (14) et dans une disposition symétrique par rapport à l'axe longitudinal (17) de la lame de ressort supérieure (14), de manière à présenter une largeur décroissante suivant l'axe longitudinal (17), à partir du talon de fixation (15).

2. Ressort de maintien suivant la revendication 1, **caractérisé par le fait que** les côtés rectilignes (18a, 18b) de la première partie de la lame (18) sont portés par des lignes droites concourantes en un point E, ou point d'épure, situé sur l'axe longitudinal (17) de la lame supérieure (14), le point d'épure E étant situé dans une section transversale de la lame supérieure (14) suivant laquelle le moment de flexion de la lame sous l'effet d'une force de compression appliquée sur sa partie d'appui (19) présente une valeur nulle.

3. Ressort de maintien suivant l'une quelconque des revendications 1 et 2, **caractérisé par le fait que** la branche flexible (18) de la lame de ressort supérieure (14) comporte, dans la direction longitudinale (17), à la suite de sa première partie à section décroissante délimitée par des côtés rectilignes (18a, 18b), une seconde partie, dans la direction longitudinale (17) de largeur croissante, délimitée latéralement par deux côtés ayant la forme de portions de cercle tangentes aux côtés rectilignes (18a, 18b) de la première partie à largeur décroissante de la branche flexible (18) de la lame de ressort supérieure (14).

4. Ressort de maintien suivant la revendication 3, **caractérisé par le fait que** la branche flexible (18) de la lame de ressort supérieure (14) présente une largeur maximale à ses extrémités longitudinales et une largeur minimale dans une section transversale (20) intermédiaire entre ses extrémités, la forme et les caractéristiques dimensionnelles de la branche flexible de la lame de ressort supérieure (14) étant définies par la largeur de la lame dans sa section de largeur minimale (20) et par la distance de la section de largeur minimale (20) à l'extrémité de largeur maximale de la première partie de la branche flexible (18).

5. Ressort de maintien suivant l'une quelconque des revendications 1 à 4, **caractérisé par le fait que** la lame supérieure (14) du ressort de maintien comporte, entre le talon de fixation (15) et la branche flexible (18), une partie cintrée (16) et que la partie d'appui (19) de la lame supérieure de ressort (14) est constituée par une partie pliée sous une forme sensiblement cylindrique d'un tronçon terminal (12) de la lame de ressort supérieure destiné à assurer le guidage et le maintien imperdable du ressort sur l'embout supérieur (1) de l'assemblage de combustible.

6. Procédé de détermination d'un profil de largeur optimisé de la branche flexible (18) de la lame supérieure (14) d'un ressort de maintien suivant l'une quelconque des revendications 1 à 5, **caractérisé par le fait :**
- **qu'**on choisit au moins la largeur maximale, la largeur minimale et la longueur de la branche flexible (18) et la distance entre une extrémité de largeur maximale de la lame supérieure (14) et une section ayant la largeur minimale,
- **qu'**on détermine par le calcul la variation du moment de flexion dans la branche flexible (18) du ressort de maintien, suivant la direction longitudinale (17) de la branche flexible (18),
- **qu'**on définit un point d'épure (E) sur un axe longitudinal (17) de la branche flexible (18) et dans une section de la branche flexible (18) où le moment de flexion est nul,
- **qu'**on trace les sections rectilignes transversales de la branche flexible (18) ayant la largeur maximale aux extrémités longitudinales de la branche flexible (18) de longueur fixée,
- **qu'**on trace les droites joignant le point d'épure (E) à des extrémités de la section transversale de largeur maximale de la branche flexible (18) du côté du talon de fixation (15), et
- **qu'**on complète le tracé des bords latéraux de la branche flexible (18) pour joindre les droites tracées à partir du point d'épure (E) à la seconde partie d'extrémité de largeur maximale de la branche flexible (18) au voisinage de la zone d'appui (19) de la branche flexible opposée au talon de fixation (15).

7. Procédé de détermination optimisée suivant la revendication 6, **caractérisé par le fait qu'**on complète le tracé de la branche flexible (18) par des lignes constituées de portions de cercle tangentes aux droites tracées à partir du point d'épure (E), la branche flexible (18) présentant une forme en diabolo.

8. Procédé suivant l'une quelconque des revendications 6 et 7, **caractérisé par le fait qu'**on détermine la variation du moment de flexion suivant la direction longitudinale (17) de la branche flexible de la lame supérieure de ressort (14) en utilisant un logiciel de calcul, à partir des déformations en traction et des contraintes de traction correspondantes dans un élément en un matériau identique au matériau dans lequel on réalise les lames du ressort de maintien, du module de Poisson du matériau et de données géométriques de lames constituant le ressort de maintien.

9. Procédé suivant l'une quelconque des revendications 6 à 8, **caractérisé par le fait qu'**on utilise le logiciel de calcul pour déterminer au moins l'une des caractéristiques du ressort de maintien parmi les caractéristiques suivantes : déformation totale, déformation plastique de la lame de ressort supérieure (14) suivant un axe longitudinal (17), pour une force de compression donnée du ressort, caractéristique force/flèche de la lame supérieure (14) du ressort, en fonction d'une force de compression sur la partie d'appui (19) de la lame supérieure (14) du ressort de maintien.

## Claims

1. Fuel assembly hold-down spring of a nuclear reactor consisting of a bundle of fuel rods parallel with one another and a framework (5) in which the fuel rods are held and comprising a top nozzle (1) at one of the ends of the framework (5) to which are attached leaf springs (3a, 3b, 3c, 3d) intended to press against an upper plate of the nuclear reactor core (25), the nuclear reactor core consisting of fuel assemblies that are juxtaposed and placed so that the top nozzles (1) of their frameworks are in the top portion of the core beneath the upper core plate (25), each of the hold-down springs (3a, 3b, 3c, 3d) of each of the nozzles (1) consisting of a stack of spring leaves (6a, 6b, 7) attached via a fastening lug onto a bearing surface (2'a) of the nozzle (1) and each comprising a flexible branch inclined relative to the bearing surface (2'a) cf the nozzle (1), the pressure of the spring (3a, 3b, 3c, 3d) on the upper core plate being provided by a bearing portion (19) of a top spring leaf (14) of the stack situated at the other end from the fastening lug (15) of the top spring leaf (14), **characterized in that** the inclined flexible branch (18) of the top spring leaf (14) has a width that can vary along its length between the fastening lug (15) on the top nozzle (1) and the bearing portion (19) or the upper core plate and that at least one portion of the inclined flexible branch (18) situated towards the fastening lug (15) is delimited laterally by rectilinear sides (18a, 18b) inclined at an angle relative to a longitudinal axis (17) of the top spring leaf (14) and in a symmetrical disposition relative to the longitudinal axis (17) of the top spring leaf (14), in order to have a decreasing width along the longitudinal axis (17) from the fastening lug (15).

2. Hold-down spring according to Claim 1, **characterized in that** the rectilinear sides (18a, 18b) of the first portion of the leaf (14) are carried on by straight lines converging at a point E, or nodal point, situated on the longitudinal axis (17) of the top leaf (14), the nodal point E being situated in a transverse section of the top leaf (14) along which the bending moment of the leaf under the effect of a compressive force applied to its bearing portion (19) has a zero value.

3. Hold-down spring according to either one of Claims 1 and 2, **characterized in that** the flexible branch (18) of the top spring leaf (14) comprises, in the longitudinal direction (17), after its first portion with a decreasing cross section delimited by rectilinear sides (18a, 18b), a second portion, in the longitudinal direction (17) of increasing width, delimited laterally by two sides having the shape of portions of a circle tangential to the rectilinear sides (18a, 18b) of the first portion of decreasing width of the flexible branch (18) of the top spring leaf (14).

4. Hold-down spring according to Claim 3,
**characterized in that** the flexible branch (18) of the top spring leaf (14) has a maximum width at its longitudinal ends and a minimum width in a transverse section (20) mid-way between its ends, the shape and the dimensional characteristics of the flexible branch of the top spring leaf (14) being defined by the width of the leaf in its section of minimum width (20) and by the distance of the section of minimum width (20) to the end of maximum width of the first portion of the flexible branch (18).

5. Hold-down spring according to any one of Claims 1 to 4, **characterized in that** the top leaf (14) of the hold-down spring comprises a bent portion (16) between the fastening lug (15) and the flexible branch (18), and that the bearing portion (19) of the top spring leaf (14) consists of a portion folded in a substantially cylindrical shape of a terminal section (12) of the top spring leaf designed to guide the spring and hold it captive on the top nozzle (1) of the fuel assembly.

6. Method of determining an optimized width profile of the flexible branch (18) of the top leaf (14) of a hold-down spring according to any one of Claims 1 to 5, **characterized in that**:
- at least the maximum width, the minimum width and the length of the flexible branch (18) and the distance between one end of maximum width of the top leaf (14) and one section having the minimum width are chosen,
- by the calculation, the variation of the bending moment in the flexible branch (18) of the hold-down spring is determined in the longitudinal direction (17) of the flexible branch (18),
- a nodal point (E) is defined on a longitudinal axis (17) of the flexible branch (18) and in a section of the flexible branch (18) where the bending moment is zero,
- the transverse rectilinear sections of the flexible branch (18) having the maximum width at the longitudinal ends of the fixed length flexible branch (18) are drawn,
- the straight lines joining the nodal point (E) to ends of the maximum width transverse section of the flexible branch (18) on the side of the fastening lug (15) are drawn, and
- the drawing of the lateral edges of the flexible branch (18) is completed to join the straight lines drawn from the nodal point (E) to the second end portion of maximum width of the flexible branch (18) to the vicinity of the bearing zone (19) of the flexible branch opposite to the fastening lug (15).

7. Optimized determination method according to Claim 6, **characterized in that** the drawing of the flexible branch (18) is completed by lines consisting of portions of a circle tangential to the straight lines drawn from the nodal point (E), the flexible branch (18) having a diabolo shape.

8. Method according to either one of Claims 6 and 7, **characterized in that** the variation of the bending moment is determined in the longitudinal direction (17) of the flexible branch of the top spring leaf (14) by using a computing program, based on the deformations in tension and corresponding tensile stresses in an element made of a material identical to the material of which the leaves of the hold-down spring are made, on Poisson's ratio of the material and on the geometric data of the leaves forming the hold-down spring.

9. Method according to any one of Claims 6 to 8, **characterized in that** the computing program is used to determine at least one of the following characteristics of the hold-down spring: total deformation, plastic deformation of the top spring leaf (14) along a longitudinal axis (17), for a given compressive force of the spring the force/bending characteristic of the top leaf (14) of the spring, according to a compressive force on the bearing portion (19) of the top leaf (14) of the hold-down spring.

## Patentansprüche

1. Niederhaltefeder eines Kernreaktor-Brennelements, gebildet durch ein Bündel zueinander paralleler Brennstäbe und ein Gestell (5), in dem die Brennstäbe festgehalten werden und das einen Kopfteil (1) umfasst, an einem der Enden des Gestells (5), auf dem Federblätter (3a, 3b, 3c, 3d) befestigt sind, die dazu bestimmt sind, sich an einer oberen Spaltraumplatte (25) des Kemreaktors abzustützen, wobei der Kernreaktor durch aneinandergrenzende Brennelemente gebildet wird, die so angeordnet sind, dass die Kopfteile (1) ihrer Gestelle sich in dem oberen Teil des Spaltraums befinden, unter der oberen Spaltraumplatte (25), wobei jede der Niederhaltefedem (3a, 3b, 3c, 3d) jedes Kopfteils (1) gebildet wird durch einen Stapel von Federblätter (6a, 6b, 7), die durch eine Befestigungsferse auf einer Auflagefläche (2'a) des Kopfteil (1) festgemacht sind und von denen jede einen in Bezug auf die Auflagefläche (2'a) des Kopfteils (1) biegsamen schrägen Zweig umfasst, wobei die Abstützung der Feder (3a, 3b, 3c, 3d) an der oberen Spaltraumplatte durch einen der Befestigungsferse (15) des obersten Federblatts (14) entgegengesetzten Abstützteil (19) des obersten Federblatts (14) des Stapels sichergestellt wird,
**dadurch gekennzeichnet, dass** der biegsame schräge Zweig (18) des obersten Federblatts (14) eine Breite aufweist, die über seine Länge zwischen der Ferse (15) zur Befestigung auf dem Kopfteil (1) und dem sich an der oberen Spaltraumplatte abstützenden Teil (19) variiert, und dass wenigstens ein an die Befestigungsferse (15) angrenzender Teil des biegsamen schrägen Zweigs (18) seitlich durch geradlinige Seitenflächen (18a, 18b) begrenzt wird, die winkelmäßig geneigt sind in Bezug auf die Längsachse (17) des obersten Federblatts (14) und zueinander symmetrisch sind in Bezug auf die Winkelachse (17) des obersten Federblatts (14), so dass ihre Breite längs der Längsachse (17) ab der Befestigungsferse (15) abnimmt.

2. Niederhaltefeder nach Anspruch 1, **dadurch gekennzeichnet, dass** gerade Linien, welche die geradlinigen Seiten (18a, 18b) des ersten Teils des Federblatts (18) verlängern, sich in einem auf der Längsachse (17) des obersten Federblatts (14) befindlichen Punkt oder Zeichnungspunkt E treffen bzw. kreuzen, wobei der Zeichnungspunkt E sich in einem Querschnitt des obersten Federblatts (14) befindet, in dem das Biegemoment des Federblatts unter der Wirkung einer auf seinen Abstützteil (19) ausgeübten Druckkraft einen Nullwert aufweist.

3. Niederhaltefeder nach einem der Ansprüche 1 und 2, **dadurch gekennzeichnet, dass** der biegsame Zweig (18) des obersten Federblatts in der Längsrichtung (17), anschließend an seinen durch geradlinige Seitenflächen (18a, 18b) begrenzten ersten Teil mit abnehmendem Querschnitt, in der Längsrichtung (17) einen zweiten Teil mit zunehmendem Querschnitt umfasst, der seitlich durch zwei Seitenflächen begrenzt wird, welche die Form von Kreisteilstücken haben, die die geradlinigen Seitenflächen (18a, 18b) des ersten Teils mit abnehmender Breite des biegsamen Zweigs (18) des obersten Federblatts (14) tangieren.

4. Niederhaltefeder nach Anspruch 3, **dadurch gekennzeichnet, dass** der biegsame Zweig (18) des obersten Federblatts (14) an seinen Längsenden eine maximale Breite und im Mittelteil zwischen seinen Enden in einen Querschnitt (20) eine minimale Breite aufweist, wobei die Form und die Abmessungskennwerte des biegsamen Zweigs des obersten Federblatts (14) definiert werden durch die Breite des Federblatts in seinem Querschnitt von minimaler Breite (20) und durch den Abstand des minimalbreiten Querschnitts (20) von dem maximalbreiten Ende des ersten Teils des biegsamen Zweigs (18).

5. Niederhaltefeder nach einem der Ansprüche 1 bis 4, **dadurch gekennzeichnet, dass** das oberste Federblatt (14) der Niederhaltefeder zwischen der Befestigungsferse (15) und dem biegsamen Zweig (18) einen gekrümmten bzw. gebogenen Teil (16) umfasst, und dass der Abstützteil (19) des obersten Federblatts (14) durch einen mit einer im Wesentlichen zylindrischen Form gebogenen Teil eines Endstücks (12) des obersten Federblatts gebildet wird, das dazu bestimmt ist, die Führung und den unverlierbaren Halt der Feder in dem Kopfteil (1) des Brennelements sicherzustellen.

6. Verfahren zur Bestimmung eines Profils von optimierter Breite des biegsamen Zweigs (18) des obersten Federblatts (14) einer Niederhaltefeder nach einem der Ansprüche 1 bis 5, **dadurch gekennzeichnet, dass**:
- man wenigstens die maximale Breite, die minimale Breite und die Länge des biegsamen Zweigs (18) und den Abstand zwischen einem Ende maximaler Breite des obersten Federblatts (14) und einen Querschnitt minimaler Breite wählt,
- man durch Berechnung die Veränderung des Biegemoments in dem biegsamen Zweig (18) der Niederhaltefeder entsprechend der Längsrichtung (17) des biegsamen Zweigs (18) bestimmt,
- man einen Zeichnungspunkt (E) auf einer Längsachse (17) des biegsamen Zweigs (18) und in einem Querschnitt des biegsamen Zweigs (18) definiert, wo das Biegemoment null ist,
- man die sich in dem Zeichnungspunkt (E) treffenden bzw. kreuzenden Geraden an Enden des Querschnitts mit maximaler Breite des biegsamen Zweigs (18) auf der Seite der Befestigungsferse (15) zeichnet, und
- man die Linie der Seitenränder des biegsamen Zweigs (18) komplettiert, um die von dem Zeichnungspunkt (E) ausgehenden Geraden zu verbinden mit dem zweiten Endteil von maximaler Breite des biegsamen Zweigs (18) in der Nähe der der Befestigungsferse (15) entgegengesetzten Abstützzone (19) des biegsamen Zweigs.

7. Optimiertes Bestimmungsverfahren nach Anspruch 6, **dadurch gekennzeichnet, dass** man die Zeichnung des biegsamen Zweigs (18) durch Linien vervollständigt, die gebildet werden durch Kreisteilstücke, weiche die Geraden tangieren, die von dem Zeichnungspunkt (E) ausgehen, wobei der biegsame Zweig (18) eine Diabolo- bzw. Stützfußform aufweist.

8. Verfahren nach einem der Ansprüche 6 und 7, **dadurch gekennzeichnet, dass** man die Veränderung des Biegemoments in der Längsrichtung (17) des biegsamen Zweigs des obersten Federblatts (14) bestimmt, indem man eine Rechensoftware benutzt und dabei ausgeht von entsprechenden Zugverformungen und Zugspannungen in einem Element aus demselben Werkstoff wie die Federblätter der Niederhaltefedem, dem Poisson-Modul des Werkstoffs und den geometrischen Daten der Federblätter, welche die Niederhaltefeder bilden.

9. Verfahren nach einem der Ansprüche 6 bis 8, **dadurch gekennzeichnet, dass** man eine Rechensoftware benutzt, um wenigstens einen der Kennwerte der Niederhaltefeder unter den folgenden Kennwerten zu bestimmen: Gesamtverformung, plastische Verformung des obersten Federblatts (14) gemäß einer Längsachse (17) bei einer bestimmten Druckkraft der Feder, Kraft/Durchbiegungskennwert des obersten Blatts (14) der Feder in Abhängigkeit von einer Druckkraft auf den Abstützteil (19) des obersten Blatts (14) der Niederhaltefeder.
